# EUROPÄISCHE PATENTSCHRIFT

(11) **EP 3 364 074 B1**
(45) Veröffentlichungstag und Bekanntmachung des Hinweises auf die Patenterteilung: **25.03.2020**
(21) Anmeldenummer: 18154176.4
(22) Anmeldetag: 30.01.2018
(51) Int. Cl.: F16H 57/021, F16C 19/54, F16H 49/00, F16H 21/28, F16H 1/32, F16H 25/06, F16C 19/18, F16H 1/28

(54) **WÄLZLAGERGETRIEBE**
ROLLING BEARING TRANSMISSION
PALIER À ROULEMENT POUR UN ENGRENAGE

(30) Priorität: 15.02.2017 DE 102017202444
(43) Veröffentlichungstag der Anmeldung: 22.08.2018
(73) Patentinhaber: Aktiebolaget SKF, 41 550 Göteborg (SE)
(72) Erfinder: Schulz, Ingo, 97447 Gerolzhofen (DE); Stephan, Bernd, 97422 Schweinfurt (DE)
(74) Vertreter: Kohl, Thomas

(56) Entgegenhaltungen:
- WO-A2-2015/067623
- DE-A1- 2 405 742
- DE-A1-102008 039 942
- DE-T5-112007 000 565
- DE-T5-112013 004 710
- US-A- 5 286 236

## Beschreibung

Die Erfindung betrifft ein Wälzlagergetriebe.

In vielen Bereichen der Technik gibt es das Erfordernis, dass eine Mechanik zum Ausführen einer möglichst hohen Spielzahl von schnellen Verschwenkbewegungen ausgelegt sein muss, wobei insbesondere in Verbindung mit einem vergleichsweise stark drehzahluntersetzen Antrieb die Mechanik gleichzeitig langlebig, robust, einfach und preisgünstig sein soll.

Ein Wälzlagergetriebe ist aus dem Dokument WO 2015/067623 A2 bekannt.

Eine Aufgabe der Erfindung ist es, diesbezüglich eine Verbesserung zu schaffen.

Diese Aufgabe wird durch den Gegenstand des Anspruchs 1 gelöst. Vorteilhafte Ausgestaltungen sind in den Unteransprüchen beschrieben.

Das Wälzlagergetriebe nach Anspruch 1 bietet dabei folgende Vorteile: Die reine Wälzlagerfunktion als solche und die hohe Antriebsuntersetzung sind sozusagen in einer Baueinheit zusammengeführt. Mit dem erfindungsgemäßen Getriebeanordnung sind auch vergleichsweise klein-winklige, schnelle, widerholungshäufige Verschwenkbewegungen realisierbar, wohingegen die internen Wälzpartner mit Vorteil einer wirklichen Rotation unterliegen und nicht nur in an sich unerwünschter Weise ständig gegeneinander hin und her bewegt werden, was bekannte Probleme wie z.B. Brinelling hervorrufen kann. Dadurch kann mit Vorteil auch eine Fettschmierung der Wälzpartner eingesetzt werden, wodurch eine aufwändige Ölschmierung nicht erforderlich ist. Das erfindungsgemäße Wälzlagergetriebe kann aber natürlich aus welchen Gründen auch immer ölgeschmiert eingesetzt und betrieben werden. Mit dem erfindungsgemäßen Wälzlagergetriebe sind weiterhin große Über- bzw. Untersetzungen von 1:50, 1:100, 1:200 oder auch mehr erzielbar. Damit eignet sich die Erfindung aber auch besonders für die Industrierobotertechnik insbesondere für die Gelenkbereiche von Roboterarmen, wo hohe Untersetzungen gefordert sind und lebenszeitlang häufig, schnelle Verschwenkbewegungen auszuführen sind. Damit eignet sie sich aber auch als Pitchverstellung bei den Blättern von Windkraftanlagen.

Weitere Vorteile, Merkmale und Einzelheiten der Erfindung ergeben sich aus dem im Folgenden beschriebenen Ausführungsbeispielen der Erfindung anhand der Figuren. Dabei zeigen:
Figur 1 einen Längsschnitt durch ein Wälzlagergetriebe gemäß der Erfindung mit zwei axial nebeneinander angeordneten Abrollflächenelementen,
Figur 2 eine prinzipielle Querschnittsdarstellung eines Wellgetriebes und
Figur 3 eine Prinzipskizze eines Zykloidgetriebes in perspektivischer Explosionsdarstellung.

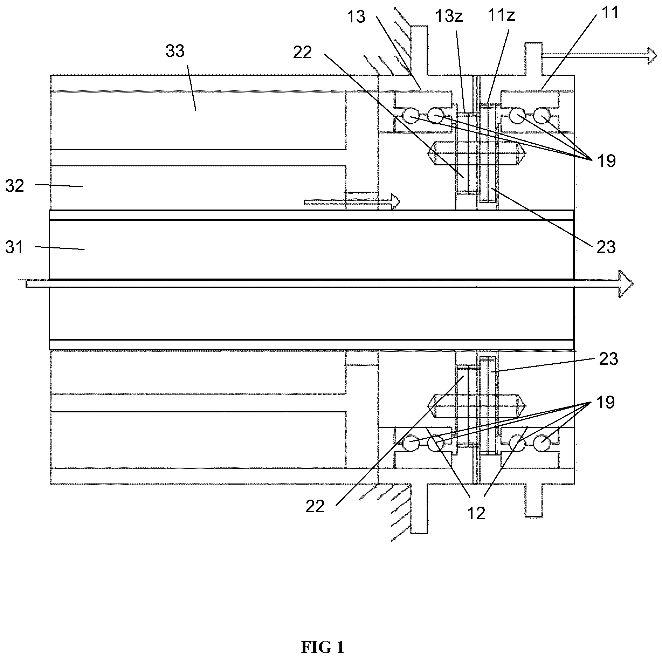

Die Figur 1 zeigt als ein Ausführungsbeispiel der Erfindung einen Längsschnitt durch ein Wälzlagergetriebe, wobei lediglich die Schnittflächen ohne Schraffur dargestellt sind. Das Wälzlagergetriebe umfasst dabei eine erstes, zweites und drittes Abrollflächenelement 11, 12 und 13, die alle ring- bzw. hohlzylinderartig ausgebildet sind. Das dritte und das zweite Abrollflächenelement 13 und 12 wie auch das erste und das zweite Abrollflächenelement 11 und 12 sind dabei zueinander jeweils nach Art eines zweireihigen Schrägkugellagers ausgebildet, wobei das erste und dritte Abrollflächenelement 11 und 13 sozusagen axial nebeneinander angeordnet sind.

Andere Lagerbauarten, beispielsweise Rillenkugellager und/oder Kegelrollenlager sind natürlich auch verwendbar. So sind die Abrollflächenelemente beispielsweise aus einem Wälzlagerstahl ausgebildet und umfassen im Bereich der beiden Reihen von als Kugeln 19 ausgebildeten Wälzkörpern gehärtete, geschliffen und/oder gehonte oder vergleichbar erzeugte Abrollbahnen, auf denen die Kugeln 19 abrollen. Die Kugeln 19 jeder der beiden Reihen sind dabei in einem beispielsweise aus Kunststoffmaterial hergestellten, nicht dargestellten Käfig angeordnet bzw. eingeschnappt, der ein gegenseitiges Berühren der Kugeln 19 verhindert. Die Kugeln 19 können ebenfalls aus Wälzlagerstahl, aber auch aus anderen Metall- insbesondere Eisenlegierungen, aus Keramik oder anderen geeigneten Materialien ausgebildet sein. Ferner ist der die Kugeln 19 beinhaltende Wälzkörperraum nach axial außen hin durch zwei links und rechts an einem der Abrollflächenelemente 13, 11 bzw. 12 oder zwischen den Abrollflächenelementen 13 bzw. 11 und 12 angeordnete ringförmige Dichtelemente abgedichtet, wobei es sich um berührende Dichtungen mit einer Dichtlippe als auch um Spaltdichtungen beispielsweise sogenannte Deckscheiben handeln kann. Die Schmierung innerhalb des abgedichteten Wälzkörperraumes ist dabei eine bevorzugt auf die gesamte Lebensdauer ausgelegte Fettschmierung.

Bei der Figur 1 sind das erste und das dritte Abrollflächenelement 11 und 13 wenigstens zweistückig ausgebildet, wobei eines der Stücke, das die Abrollbahnen für die Kugeln 19 aufweist, ein gängiger Außenrings eines zweireihigen Schrägkugellagers ist. Das zweite Abrollflächenelement 12 ist mehrstückig ausgebildet, wobei zwei der Stücke, die die Abrollbahnen für die Kugeln 19 aufweisen, gängig Innenringe von zweireihigen Schrägkugellagern sind. Durch diese Ausbildung können mit Vorteil im Wesentlichen katalogmäßige zweireihige Schrägkugellager verwendet werden. In anderen Ausführungen kann natürlich auch eine einstückige materialeinheitliche Ausbildung zum Einsatz kommen.

Innerhalb des zweiten Abrollflächenelements 12 und axial zwischen den beiden Schrägkugellagern sind mehrere in Umfangsrichtung verteilt angeordnete und im zweiten Abrollflächenelement 12 drehbar gelagerte Paare von Zahnräder 22 und 23 vorgesehen. Bei jedem Paar sind die beiden Zahnräder 22 und 23 fest miteinander verbunden, beispielsweise indem sie einstückig und materialeinheitlich als ein Doppelzahnrad ausgebildet sind. Die Lagerung der Zahnräder 22 und 23 kann durch Nadellager oder Nadelkränze oder durch Gleitlagerung auf einem Bolzen platzsparend konstruiert sein. Die Zahnräder 22 sind dabei derart angeordnet und ausgebildet, dass sie mit einem am dritten Abrollflächenelement 13 ausgebildeten innenverzahnten Zahnradbereich 13z kämmen, wohingegen die Zahnräder 23 derart angeordnet und ausgebildet sind, dass sie mit einem am ersten Abrollflächenelement 11 ausgebildeten innenverzahnten Zahnradbereich 11z kämmen.

Das zweite Abrollflächenelement 12 sitzt auf einer Hohlwelle 31. Mit der Hohlwelle 31 ist weiterhin ein Rotor 32 eines Elektromotors verbunden, wobei der Stator 33 des Elektromotors mit dem dritten bezüglich der anderen feststehenden Abrollflächenelement 13 verbunden ist. Damit ist über den Elektromotor die Hohlwelle 31 und das mit ihr verbundene zweite Abrollflächenelement 12 antreibbar, wobei der Abtrieb über das erste Abrollflächenelement 11 erfolgt.

Dabei übersetzt das Wälzlagergetriebe der Figur 1 vom Antrieb hin zum Abrieb wie folgt: Durch das Drehen der Hohlwelle 31 werden die mit dem Zahnradbereich 13z des dritten Abrollflächenelement 13 kämmenden Zahnräder 22 in eine Rotation um ihre eigenen Drehachsen versetzt. Damit werden auch die Zahnräder 23 mitgedreht, deren Drehung über ihr Kämmen mit dem Zahnradbereich 11z das erste Abrollflächenelement 11 bewegt.

Eine Spielfreiheit des Wälzlagergetriebes kann bei vier über den Umfang verteilt angeordneten Paaren von Zahnräder 22 und 23 dadurch erzielt werden, indem beispielsweise zwei einander gegenüberliegende Paare gegenüber den beiden anderen einander gegenüberliegenden Paaren gegensinnig zueinander vorgespannt sind, beispielsweise durch einen entsprechenden Federmechanismus. In einer anderen Ausführungsform kann die Spielfreiheit auch dadurch erzeugt sein, dass die Zahnradbereich 11z bzw. 13z nach radial innen hin mit einer geringfügigen Überdeckung zu den Zahnradpaaren, z.B. im Zehntel-mm-Bereich ausgebildet sind. Ein Montieren kann dann insbesondere durch ein Erwärmen des Zahnradbereich 11z und 13z erfolgen, wobei die Zahnradbereich 11z und 13z mit entsprechender Dicke und zum Erzielen einer wunschgemäßen Federkennlinie beispielsweise hinreichend dünnwandig auszubilden sind.

Beim Wälzlagergetriebe der Figur 1 können natürlich auf der dem Getriebe abgewandten Seite des Elektromotors bei Bedarf eine nicht näher dargestellte Bremse, ebenfalls nicht näher dargestellte Sensoren zum Erfassen unterschiedlichster Größen wie auch andere Anbauelemente ergänzt sein.

Mit dem Wälzlagergetriebe lassen sich damit auch vergleichsweise kleinwinklige Verschwenkbewegungen zwischen dem ersten Abrollflächenelements 11 und dem dritten Abrollflächenelement 13 unter einem antriebstechnisch günstigen großen Untersetzungsverhältnis erzielen, bei dem gleichzeitig die eingesetzten Wälzpartner mit Vorteil einer wirklichen Rotation unterliegen und nicht nur in an sich unerwünschter Weise ständig hin und her bewegt werden, was bekannte Probleme wie z.B. Brinelling hervorrufen kann. Dadurch kann mit Vorteil auch eine Fettschmierung der Wälzpartner eingesetzt werden, wodurch eine aufwändige Ölschmierung nicht erforderlich ist. Das erfindungsgemäße Wälzlagergetriebe kann aber natürlich aus welchen Gründen auch immer ölgeschmiert eingesetzt und betrieben werden.

Somit lassen sich mit dieser Anordnung mit dem Vorteil, dass alle Teile rotieren, und damit mit dem Vorteil guter Schmierverhältnisse hohe Untersetzungen erzielen. Damit eignet sich die Erfindung aber auch besonders für die Robotertechnik insbesondere für die Gelenkbereiche von Roboterarmen, wo hohe Untersetzungen gefordert sind und dauerhaft Verschwenkbewegungen ausgeführt werden müssen.

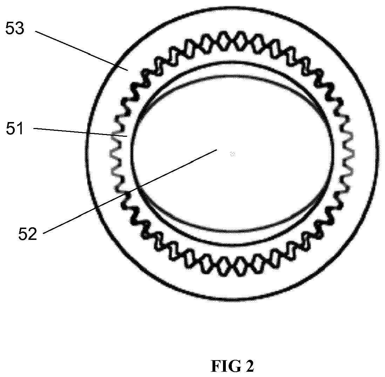

In anderen Ausführungen können anstelle der planetengetriebeartigen Ausbildung der Figur 1 auch andere geeignete Getriebe- bzw. Wandelmechanismen zum Einsatz kommen, beispielsweise ein Wellgetriebe, wobei die Figur 2 eine prinzipielle Querschnittsdarstellung eines Wellgetriebes zeigt. Bezugnehmend auf die Figur 1 fallen somit die Zahnräder 22 und 23 sowie der Zahnradbereich 11z weg und an deren Stelle treten eine elliptische Scheibe 52 als Wellengenerator und ein sogenannter Flexspline 51. Der innenverzahnte Außenring 53 des Wellgetriebes ist beispielsweise vom Zahnradbereich 13z gebildet. Die elliptische Scheibe 52 ist dabei auf der oder von der Hohlwelle 31 oder dem zweiten Abrollflächenelement 12 gebildet. Der zwischen der elliptischen Scheibe 52 und dem innenverzahnten Außenring 53 angeordnete Flexspline 51 ist mit dem ersten Abrollflächenelement 11 verbunden oder von diesem ausgebildet.

Auf die elliptischen Scheibe 52 ist üblicherweise ein nicht dargestelltes Wälzlager mit dünnem verformbaren Laufring aufgeschrumpft. Die elliptische Scheibe 52 ist der Antrieb des Getriebes. Der Flexspline 51 ist eine verformbare zylindrische Stahlbüchse mit Außenverzahnung. Diese Stahlbüchse ist der Abtrieb. Die Außenverzahnung der Stahlbüchse hat weniger Zähne als die Innenverzahnung des Außenrings 53. In der Regel beträgt diese Differenz zwei Zähne. Somit vollführen Flexspline 51 und der Außenring 53 bei jeder Umdrehung eine Relativbewegung um zwei Zähne.

Die angetriebene elliptische Scheibe 51 verformt die dünnwandige Stahlbüchse. Dadurch greift die Außenverzahnung der Stahlbüchse im Bereich der großen Ellipsenachse in die Innenverzahnung des Außenrings 53. Aufgrund des sozusagen feststehenden Außenrings 53 bleibt bei einer Umdrehung des Antriebs die Stahlbüchse (der Abtrieb) entsprechend der geringeren Zahl der Zähne gegenüber dem Außenring 53 zurück.

Durch hohen Zähnezahlen der Verzahnungen erhält man sehr große Untersetzungen. Beispielsweise beträgt die Untersetzung bei 200 Zähnen für die Innenverzahnung und 198 für die Stahlbüchse 198:2 = 99, wenn die elliptische Scheibe 52 als Antrieb und die Stahlbüchse als Abtrieb festgelegt sind. Bei 99 Umdrehungen der elliptischen Scheibe 52 dreht sich die verformbare Stahlbüchse einmal. Ca. 30 % der Zähne beteiligen sich an der Kraftübertragung. Zusammen mit dem hohen Untersetzungsverhältnis von 30:1 bis zu 320:1 ist das Wellgetriebe torsionssteif und spielfrei. Je nach Ausführung ist die Positioniergenauigkeit besser als 30 Winkelsekunden.

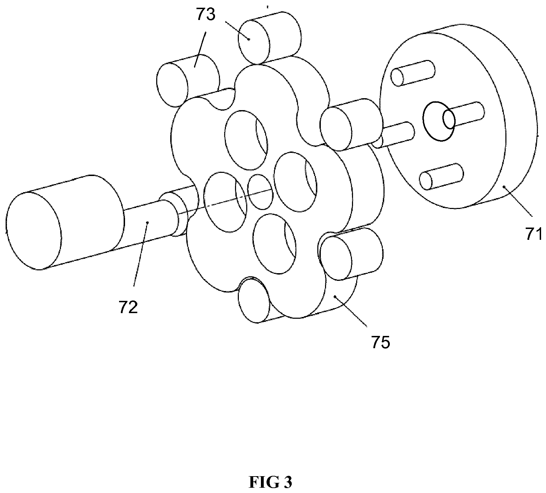

Das Wellgetriebe auch Spannungswellengetriebe oder Gleitkeilgetriebe genannt, ist also ein Getriebe mit einem elastischen Übertragungselement, das sich durch hohe Übersetzung und Steifigkeit auszeichnet. Ein weiteres spielfreies Getriebe zur Übertragung von großen Drehmomenten ist das Zykloidgetriebe. Das Zykloidgetriebe hat einen höheren Wirkungsgrad als das Wellgetriebe (95% gegenüber 85%), ist aber aufwändiger in der Fertigung. Auch ein Zykloidgetriebe kann anstelle der planetengetriebeartigen Ausbildung der Figur 1 zum Einsatz kommen, dazu zeigt die Figur 3 eine Prinzipskizze eines Zykloidgetriebes in perspektivischer Explosionsdarstellung.

Bezugnehmend auf die Figur 1 sind die Zahnräder 22 und 23 sowie die Zahnradbereich 11z und 13z durch einen Exzenter 72, eine Kurvenscheibe 75, Bolzen 73, beispielsweise eines nicht dargestellten Bolzenrings und eine Bolzenscheibe 71 ersetzt. Der Exzenter 72 ist dabei auf der oder von der Hohlwelle 31 oder auch vom zweiten Abrollflächenelement 12 gebildet. Die Bolzen 73 treten an die Stelle des Zahnradbereichs 13z und sind mit dem dritten Abrollflächenelement 13 verbunden oder davon ausgebildet. Die Bolzenscheibe 71 ist mit dem ersten Abrollflächenelement 11 verbunden oder von diesem ausgebildet. Dabei treibt der Exzenter 72 die Kurvenscheibe 75 mit Kurvenabschnitten der Anzahl n an, die sich über die n+1 Bolzen 73 abwälzen. Je Umdrehung des Antriebs bewegt sich der von der Bolzenscheibe 71 gebildete Abtrieb um einen Kurvenabschnitt weiter. So entsteht ebenfalls eine hohe Drehzahluntersetzung.

Da Zykloidgetriebe Exzentergetriebe sind, bei denen Kurvenscheiben Drehmomente wälzend übertragen, kommen sie ohne Zahnräder aus und sind keinen Scherkräften ausgesetzt. Schlagartige Ausfälle sind ausgeschlossen.

In wiederum anderen Ausführungsformen kann anstelle des planetengetriebeartigen Getriebemechanismus der Figur 1 auch ein Kugelübersetzungsgetriebe (ball-type speed reducer) eingesetzt sein, bei dem Kugeln zwischen einem ersten und einem zweiten Bauelement des Getriebes angeordnet sind, wobei die Kugeln im ersten Bauelement in einer insbesondere elliptisch geformten Rille und im zweiten Bauelement in einer insbesondere zykloidisch geformten Rille geführt sind. Ein Beispiel für ein derartiges Getriebe ist beispielsweise in der US 5 286 236 beschrieben. Auch mit derartigen Getrieben sind bei geringen Bauraumanforderungen hohe Übersetzung von eins zu hundert und bei einem entsprechenden Kombinieren bis hin zu eins zu mehreren tausend erzielbar.

## Patentansprüche

1. Wälzlagergetriebe, beinhaltend folgende Merkmale:
- Ein zum drehenden Antreiben vorgesehenes Antriebselement, ein als verschwenkender Abtrieb vorgesehenes Abtriebselement und ein gegenüber dem Antriebs- und Abtriebselement nicht mitdrehendes bzw. nicht mitverschwenkendes Statorelement,
- wenigstens ein erstes mit dem Abtriebselement verbundenes oder davon gebildetes Abrollflächenelement (11), ein zweites mit dem Antriebselement verbundenes oder davon gebildetes Abrollflächenelement (12) und ein drittes mit dem Statorelement verbundenes oder davon gebildetes Abrollflächenelement (13), auf denen Wälzkörper (19) zum Abrollen vorgesehen sind,
- wenigstens ein erster Satz von Wälzkörpern (19), der derart zwischen dem ersten (11) und zweiten (12) Abrollflächenelement angeordnet ist, dass die Abrollflächenelemente (11, 12) nach Art eines Wälzlagers gegeneinander drehbar sind,
- wenigstens ein zweiter Satz von Wälzkörpern (19), der derart zwischen dem zweiten (12) und dritten (13) Abrollflächenelement angeordnet ist, dass die Abrollflächenelemente (12, 13) nach Art eines Wälzlagers gegeneinander drehbar sind,
- ein Getriebemechanismus, der derart zwischen den Elementen wirkend angeordnet und ausgebildet ist, dass zwischen dem Antrieb und dem Abtrieb eine Bewegungsgrößenänderung erzielt ist;
**dadurch gekennzeichnet, dass** das Abtriebselement frei von einem weiteren gegenüber dem Statorelement wirkenden Wälzlager ausgebildet ist.

2. Wälzlagergetriebe nach Anspruch 1, wobei der Getriebemechanismus derart ausgebildet ist, dass eine Drehzahlveränderung im Verhältnis von 1:2 bis 1:20000, insbesondere von 1:50 bis 1:500 erzielt ist und/oder der Getriebemechanismus spielfrei ausgebildet ist.

3. Wälzlagergetriebe nach einem der Ansprüche 1 oder 2, wobei das zweite Abrollflächenelement (12) wenigstens zweiteilig dem ersten (11) und dritten (13) Abrollflächenelement entsprechend ausgebildet ist.

4. Wälzlagergetriebe nach einem der Ansprüche 1 bis 3, wobei der erste und der zweite Satz von Wälzkörpern (19) axial nebeneinander angeordnet sind, wobei der erste und/oder zweite Satz von Wälzkörpern (19) als ein ein-, zwei- oder mehrreihiger Satz von Wälzkörpern (19) ausgebildet ist, wobei die Wälzkörper (19) als Kugeln oder Rollen ausgebildet sind, und/oder wobei der erste und/oder zweite Satz von Wälzkörpern (19) und die zugehörigen Abrollflächenelemente insbesondere nach Art eines zweireihigen Schrägkugellagers ausgebildet sind.

5. Wälzlagergetriebe nach einem der Ansprüche 1 bis 4, wobei die Wälzlager fett- oder auch ölgeschmiert sind, zum Abdichten der die Wälzkörper (19) beinhaltenden Räume Dichtelemente vorgesehen sind und/oder die Wälzkörper (19) wenigstens einer der Sätze oder Reihen in einem Käfig angeordnet sind.

6. Wälzlagergetriebe nach einem der Ansprüche 1 bis 5, wobei der Getriebemechanismus planetengetriebeartig ausgebildet ist, wobei insbesondere mehrere in Umfangsrichtung verteilte, im Antriebselement oder zweiten Abrollflächenelement (12) gelagerte Doppelzahnräder (22, 23) mit einem am Statorelement oder dritten Abrollflächenelement (13) ausgebildeten oder damit verbunden innenverzahnten Zahnradbereich (13z) und mit einem am Abtriebselement oder ersten Abrollflächenelement (11) ausgebildeten oder damit verbundenen weiteren innenverzahnten Zahnradbereich (11z) zusammenwirken.

7. Wälzlagergetriebe nach Anspruch 6, wobei zur Spielfreiheit über den Umfang verteilt angeordnete Paare von einander gegenüberliegenden Doppelzahnrädern (22, 23) gegensinnig zueinander vorgespannt sind, insbesondere durch einen entsprechenden Federmechanismus, und/oder wenigstens einer der innenverzahnten Zahnradbereiche (13z, 11z) mit einer geringfügigen Überdeckung zu den Zahnradpaaren (22, 23), insbesondere im Zehntel-mm-Bereich ausgebildet ist.

8. Wälzlagergetriebe nach einem der Ansprüche 1 bis 5, wobei der Getriebemechanismus ein Wellgetriebe umfasst, wobei insbesondere ein ellipsenumfangsbahnerzeugender Wellengenerator (52) zum Verformen eines Flexsplines (51) und eine Außenverzahnung des Flexsplines (51) zum Eingreifen in einen innenverzahnten Zahnradbereich vorgesehen ist, wobei insbesondere der Wellengenerator (52) mit dem Antriebselement oder zweiten Abrollflächenelement (12) verbunden oder davon ausgebildet ist, der Flexspline (51) mit dem Abtriebselement oder ersten Abrollflächenelement (11) verbunden oder davon ausgebildet ist, und der Zahnradbereich mit dem Statorelement oder dritten Abrollflächenelement (13) verbunden oder davon ausgebildet ist.

9. Wälzlagergetriebe nach einem der Ansprüche 1 bis 5, wobei der Getriebemechanismus ein Zykloidgetriebe umfasst, wobei insbesondere eine Kurvenscheibe (75), ein die Kurvenscheibe (75) antreibender Exzenter (72), Bolzen (73) als Abwälzpartner für die Kurvenscheibe (75) und eine von der Kurvenscheibe (75) antreibbare Bolzenscheibe (71) vorgesehen sind, wobei insbesondere der Exzenter (72) mit dem Antriebselement oder zweiten Abrollflächenelement (12) verbunden oder davon ausgebildet ist, die Bolzenscheibe (71) mit dem Abtriebselement oder ersten Abrollflächenelement (11) verbunden oder davon ausgebildet ist, und die Bolzen (73) am Statorelement oder dritten Abrollflächenelement (13) vorgesehen oder davon ausgebildet sind.

10. Wälzlagergetriebe nach einem der Ansprüche 1 bis 5, wobei der Getriebemechanismus ein Kugelübersetzungsgetriebe (ball-type speed reducer) umfasst, bei dem Kugeln zwischen einem ersten und einem zweiten Bauelement des Getriebes angeordnet sind, wobei die Kugeln im ersten Bauelement in einer insbesondere elliptisch geformten Rille und im zweiten Bauelement in einer insbesondere zykloidisch geformten Rille geführt sind.

## Claims

1. Rolling bearing transmission, including the following features:
- a drive element provided for rotary driving, an output element provided as a pivotable output drive, and a stator element not co-rotating or co-pivoting with respect to the drive element and output element,
- at least one rolling surface element (11) connected to the output element or formed thereby,
a second rolling surface element (12) connected to the drive element or formed thereby,
and a third rolling surface element (13) connected to the stator element or formed thereby, on which rolling elements (19) are provided to roll,
- at least one first set of rolling elements (19), which is arranged between the first (11) and second (12) rolling surface element in such a way that the rolling surface elements (11, 12) can be rotated relative to one another in the manner of a rolling bearing,
- at least one second set of rolling elements (19), which is arranged between the second (12) and third (13) surface rolling element in such a way that the rolling surface elements (12, 13) can be rotated relative to one another in the manner of a rolling bearing,
- a gear mechanism, which is arranged to act between the elements and is designed such that a change in the magnitude of movement is achieved between the drive and the output;
**characterized in that** the output element is designed to be free from a further rolling bearing acting against the stator element.

2. Rolling bearing transmission according to Claim 1, wherein the gear mechanism is designed in such a way that a rotational speed change in the ratio of 1:2 to 1:20,000, in particular of 1:550 to 1:500, is achieved and/or the gear mechanism is designed to be play-free.

3. Rolling bearing transmission according to either of Claims 1 and 2, wherein the second rolling surface element (12) is formed in at least two parts corresponding to the first (11) and third (13) surface rolling element.

4. Rolling bearing transmission according to one of Claims 1 to 3, wherein the first and the second set of rolling elements (19) are arranged axially beside each other, wherein the first and/or second set of rolling elements (19) is designed as a one-row, two-row or multi-row set of rolling elements (19), wherein the rolling elements (19) are formed as balls or rollers,
and/or wherein the first and/or second set of rolling elements (19) and the associated rolling surface elements are in particular designed in the manner of a two-row angular contact ball bearing.

5. Rolling bearing transmission according to one of Claims 1 to 4, wherein the rolling elements are grease-lubricated or oil-lubricated, sealing elements for sealing off spaces which contain the rolling elements (19) are provided and/or the rolling elements (19) of at least one of the sets or rows are arranged in a cage.

6. Rolling element transmission according to one of Claims 1 to 5, wherein the gear mechanism is designed in the manner of a planetary gear, wherein in particular a plurality of double gear wheels (22, 23) distributed in the circumferential direction and mounted in the drive element or second rolling surface element (12) interact with an internally toothed gear wheel region (13z) formed on the stator element or third rolling surface element (13) or connected thereto and with a further internally toothed gear wheel region (11z) formed on the output element or first rolling surface element (11) or connected thereto.

7. Rolling element transmission according to Claim 6, wherein, to ensure the freedom from play, pairs of double gear wheels (22, 23) located opposite each other are preloaded in opposite directions relative to each other, in particular by a corresponding spring mechanism, and/or at least one of the internally toothed gear wheel regions (13z, 11z) is formed with a slight overlap relative to the gear wheel pairs (22, 23), in particular in the tenths of a millimetre range.

8. Rolling bearing transmission according to one of Claims 1 to 5, wherein the gear mechanism comprises a wave gear, wherein in particular a wave generator (52) producing an elliptical circumferential path for deforming a flexible spline (51) and outer toothing of the flexible spline (51) is provided to engage in an internally toothed gear wheel region,
wherein in particular the wave generator (52) is connected to the drive element or second rolling surface element (12) or is formed thereby, the flexible spline (51) is connected to the output element or first rolling surface element (11) or is formed thereby, and the gear wheel region is connected to the stator element or third rolling surface element (13) or is formed thereby.

9. Rolling element transmission according to one of Claims 1 to 5, wherein the gear mechanism comprises a cycloid gear, wherein in particular a cam disc (75), an eccentric (72) driving the cam disc (75), bolts (73) as rolling partners for the cam disc (75) and a bolt disc (71) that can be driven by the cam disc (75) are provided, wherein in particular the eccentric (72) is connected to the drive element or second rolling surface element (12) or is formed thereby, the bolt disc (71) is connected to the output element or the first rolling surface element (11) or is formed thereby, and the bolts (73) are provided on the stator element or third rolling surface element (13) or are formed thereby.

10. Rolling element transmission according to one of Claims 1 to 5, wherein the gear mechanism comprises a ball-type speed reducer, in which balls are arranged between a first and a second structural element of the transmission, wherein the balls in the first structural element are guided in an in particular elliptically shaped groove, and in the second structural element are guided in an in particular cycloidally shaped groove.

## Revendications

1. Engrenage à palier à rouleaux, comprenant les éléments caractéristiques suivants :
- un élément d'entraînement prévu pour l'entraînement en rotation, un élément de sortie prévu comme sortie pivotante et un élément statorique qui ne tourne pas ou ne pivote pas par rapport à l'élément d'entraînement et l'élément de sortie,
- au moins un premier élément de surface de roulement (11) relié à l'élément de sortie ou formé par celui-ci, un deuxième élément de surface de roulement (12) relié à l'élément d'entraînement ou formé par celui-ci et un troisième élément de surface de roulement (13) relié à l'élément statorique ou formé par celui-ci, sur lesquels des éléments roulants (19) sont destinés à rouler,
- au moins un premier ensemble d'éléments roulants (19) qui est disposé entre les premier (11) et deuxième (12) éléments de surface de roulement de sorte que les éléments de surface de roulement (11, 12) puissent tourner l'un par rapport à l'autre à la manière d'un palier à rouleaux,
- au moins un deuxième ensemble d'éléments roulants (19) qui est disposé entre les deuxième (12) et troisième (13) éléments de surface de roulement de sorte que les éléments de surface de roulement (12, 13) puissent tourner l'un par rapport à l'autre à la manière d'un palier à rouleaux,
- un mécanisme d'engrenage qui est disposé de manière à agir entre les éléments et qui est conçu de manière à modifier la quantité de mouvement entre l'entraînement et la sortie ;
**caractérisé en ce que** l'élément de sortie est conçu pour être dépourvu d'un autre palier à rouleaux agissant par rapport à l'élément statorique.

2. Engrenage à palier à rouleaux selon la revendication 1, le mécanisme d'engrenage étant conçu de telle sorte qu'un changement de vitesse de rotation dans le rapport allant de 1:2 à 1:20000, en particulier de 1:50 à 1:500, est obtenu et/ou le mécanisme d'engrenage étant conçu pour être dépourvu de jeu.

3. Engrenage à palier à rouleaux selon l'une des revendications 1 et 2, le deuxième élément de surface de roulement (12) étant formé au moins en deux parties de manière à correspondre au premier (11) et au troisième (13) élément de surface de roulement.

4. Engrenage à palier à rouleaux selon l'une des revendications 1 à 3, le premier et le deuxième ensemble d'éléments roulants (19) étant disposés axialement l'un à côté de l'autre, le premier et/ou le deuxième ensemble d'éléments roulants (19) étant conçu (s) comme un ensemble à une, deux ou plus de deux rangées d'éléments roulants (19), les éléments roulants (19) étant conçus comme des billes ou des rouleaux, et/ou le premier et/ou le deuxième ensemble d'éléments roulants (19) et les éléments de surface de roulement associés étant conçus en particulier à la manière d'un palier à billes à contact oblique à deux rangées.

5. Engrenage à palier à rouleaux selon l'une des revendications 1 à 4, les paliers à rouleaux étant lubrifiés à la graisse ou à l'huile, des éléments d'étanchéité étant prévus pour étanchéifier les espaces contenant les éléments roulants (19) et/ou les éléments roulants (19) de l'un au moins parmi les ensembles ou les rangées étant disposés dans une cage.

6. Engrenage à palier à rouleaux selon l'une des revendications 1 à 5, le mécanisme d'engrenage étant conçu comme un engrenage planétaire, en particulier une pluralité de roues dentées doubles (22, 23) réparties dans la direction circonférentielle et montées dans l'élément d'entraînement ou le deuxième élément de surface de roulement (12) coopérant avec une région de roue dentée (13z) à denture intérieure formée au niveau de l'élément statorique ou du troisième élément de surface de roulement (13) ou reliée à celui-ci et avec une autre région de roue dentée (11z) à denture intérieure formée au niveau de l'élément de sortie ou du premier élément de surface de roulement (11) ou reliée à celui-ci.

7. Engrenage à palier à rouleaux selon la revendication 6, des paires de roues dentées doubles (22, 23) opposées l'une à l'autre, lesquelles paires sont réparties sur la circonférence pour garantir l'absence de jeu, étant précontraintes les unes vers les autres dans des directions opposées, en particulier au moyen d'un mécanisme à ressort correspondant, et/ou l'une au moins des régions de roue dentée (13z, 11z) à denture intérieure étant conçue avec un léger chevauchement avec les paires de roues dentées (22, 23), en particulier de l'ordre du dixième de mm.

8. Engrenage à palier à rouleaux selon l'une des revendications 1 à 5, le mécanisme d'engrenage comprenant un engrenage ondulé, en particulier un générateur d'ondulations (52) générant une piste circonférentielle elliptique, étant prévu pour déformer une cannelure flexible (51) et une denture extérieure de la cannelure flexible (51) étant prévue pour l'engagement dans une région de roue dentée à denture intérieure, en particulier le générateur d'ondulation (52) étant relié à l'élément d'entraînement ou au deuxième élément de surface de roulement (12) ou étant formé par l'un de ceux-ci, la cannelure flexible (51) étant reliée à l'élément de sortie ou au premier élément de surface de roulement (11) ou étant formée par l'un de ceux-ci et la région de roue dentée étant reliée à l'élément statorique ou au troisième élément de surface de roulement (13) ou étant formée par l'un de ceux-ci.

9. Engrenage à palier à rouleaux selon l'une des revendications 1 à 5, le mécanisme d'engrenage comprenant un engrenage cycloïde, en particulier une came (75), un excentrique (72) entraînant la came (75), des boulons (73) utilisés comme partenaires de roulement pour la came (75) et un disque à boulon (71) pouvant être entraîné par la came (75) étant prévus, en particulier l'excentrique (72) étant relié à l'élément d'entraînement ou au deuxième élément de surface de roulement (12) ou étant formé par l'un de ceux-ci, le disque à boulon (71) étant relié à l'élément de sortie ou au premier élément de surface de roulement (11) ou étant formé par l'un de ceux-ci, et les boulons (73) étant prévus au niveau de l'élément statorique ou d'un troisième élément de surface de roulement (13) ou étant formés par l'un de ceux-ci.

10. Engrenage à palier à rouleaux selon l'une des revendications 1 à 5, le mécanisme d'engrenage comprenant un réducteur de vitesse du type à billes (bail-type speed reducer) dans lequel les billes sont disposées entre un premier et un deuxième composant de l'engrenage, les billes étant guidées, dans le premier composant, dans une rainure notamment de forme elliptique et, dans le deuxième composant, dans une rainure notamment de forme cycloïdale.
